(19)

**Europäisches Patentamt**
**European Patent Office**
**Office européen des brevets**

(11) **EP 4 726 832 A1**

(12) **EUROPEAN PATENT APPLICATION**

(43) Date of publication:
**15.04.2026 Bulletin 2026/16**

(21) Application number: **25208223.5**

(22) Date of filing: **13.10.2025**

(51) International Patent Classification (IPC):
**H01M 10/04** (2006.01)   **H01M 10/052** (2010.01)

(52) Cooperative Patent Classification (CPC):
**H01M 10/0431; H01M 10/0459; H01M 10/0468;
H01M 10/052**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **14.10.2024 KR 20240139713**

(71) Applicant: **SAMSUNG SDI CO., LTD.
Yongin-si, Gyeonggi-do 17084 (KR)**

(72) Inventors:
• **Bae, Su Bin
  16678 Gyeonggi-do, Suwon-si (KR)**

• **Lee, Byung Min
  16678 Gyeonggi-do, Suwon-si (KR)**
• **Kim, Sang Hun
  16678 Gyeonggi-do, Suwon-si (KR)**
• **Han, Dong Yun
  16678 Gyeonggi-do, Suwon-si (KR)**
• **Roh, Chan Woo
  16678 Gyeonggi-do, Suwon-si (KR)**
• **Kim, Hyun Kyu
  16678 Gyeonggi-do, Suwon-si (KR)**
• **Jo, Beop Gwan
  16678 Gyeonggi-do, Suwon-si (KR)**

(74) Representative: **Meissner Bolte Partnerschaft
mbB
Patentanwälte Rechtsanwälte
Postfach 86 06 24
81633 München (DE)**

(54) **ELECTRODE ASSEMBLY, RECHARGEABLE BATTERY, AND BATTERY PACK**

(57)     An electrode assembly (20) includes a separator (13) folded multiple times with bent portions alternating on a first side (13a) and a second side (13b) thereof in a zigzag form, a first electrode (11) inserted into an inner side of each of the bent portions on the first side (13a) of the separator (13), a second electrode (12) inserted into an inner side of each of the bent portions on the second side (13b) of the separator (13), and a fixing member (14) fixing the separator (13), the first electrode (11), and the second electrode (12), the fixing member (14) including a hydrogel.

FIG 1.

## Description

### CROSS-REFERENCE TO RELATED APPLICATION

The present application claims priority and the benefit of Korean Patent Application No. 10-2024-0139713, filed on October 14, 2024, in the Korean Intellectual Property Office, the entire invention of which is incorporated herein by reference.

### 1. Field

The present invention relates to an electrode assembly and a rechargeable battery.

### 2. Description of the Related Art

Unlike a primary battery that cannot be recharged, a rechargeable battery is a battery that can be recharged and discharged. A low-capacity rechargeable battery may be used for portable small-sized electronic devices, such as smartphones, feature phones, notebook computers, digital cameras, and camcorders, and a high-capacity battery is widely used as a power source for driving a motor and a power storage battery in hybrid vehicles or electric vehicles. Such a rechargeable battery includes electrodes including a positive electrode and/or a negative electrode, an electrode assembly including the electrodes, a case that accommodates the electrode assembly, electrode terminals connected to the electrode assembly, and the like.

The above-described information disclosed in the background technology of the present invention is merely intended to improve understanding of the background of the present invention and thus may include information that does not form the related art.

### SUMMARY

The present invention provides an electrode assembly, including a separator folded multiple times with bent portions alternating on a first side and a second side thereof in a zigzag form, a first electrode inserted into an inner side of each of the bent portions on the first side of the separator, a second electrode inserted into an inner side of each of the bent portions on the second side of the separator, and a fixing member fixing the separator, the first electrode, and the second electrode, the fixing member including a hydrogel.

The fixing member may be between the bent portions on the first side and the bent portions on the second side of the separator.

The first electrode may include a first tab portion protruding from one side surface thereof, the second electrode includes a second tab portion protruding from one side surface thereof, and the fixing member is between the first tab portion and the second tab portion.

A width of the fixing member may be 80% to 100% of a distance between one end of the first tab portion of the first electrode and one end of the second tab portion of the second electrode.

The fixing member may be a single plane or has a plurality of convex surfaces.

The fixing member may include a plurality of convex surfaces, the plurality of convex surfaces corresponding to the bent portions on at least one of the first side and the second side of the separator.

A ratio of an area of the fixing member to an area of a rectangle defined by a distance between one end of the first tab portion of the first electrode and one end of the second tab portion of the second electrode, and a thickness of the electrode assembly may range from 80% to 100%.

The fixing member may be further located in at least one of a space between the first tab portion of the first electrode and the bent portion on one side of the separator, and a space between the second tab portion of the second electrode and the bent portion on the other side of the separator.

The first electrode may include the first tab portion, a first current collector, and a first active material layer, the first tab portion being welded to a surface of an uncoated portion of the first current collector, and the second electrode may include the second tab portion, a second current collector, and a second active material layer, the second tab portion being welded to a surface of an uncoated portion of the second current collector.

The hydrogel may include a polymer with a weight-average molecular weight of 200 kDa or more.

The polymer may have a functional group crosslinkable by an active energy ray.

The functional group may include one or more of an acrylate group, a methacrylate group, a vinyl group, an epoxy group, and an allyl group.

The polymer may be nonionic and has a functional group crosslinkable by one or more active energy rays.

The hydrogel may further include a crosslinking agent, the crosslinking agent including a functional group crosslinkable by an active energy ray.

The hydrogel may further include a photoinitiator, the photoinitiator including a benzophenone compound.

The hydrogel may include an electrolyte salt in an amount of 1 wt% or less, based on 100 wt% of the hydrogel.

The fixing member may be insoluble in an electrolyte.

The fixing member may be a continuous film or sheet.

A thickness of the fixing member may range from 70 $\mu$m to 300 $\mu$m.

The present invention provides a rechargeable battery including a case, and an electrode assembly accommodated in the case, wherein the electrode assembly includes a separator folded multiple times with bent portions alternately formed on one side and the other side thereof in a zigzag form, a first electrode inserted into an inner side of the bent portion on one side of the separator, and a second electrode inserted into an inner side of the bent portion on the other side of the separator, wherein the separator, the first electrode, and the second electrode are fixed by a fixing member, and the fixing member includes a hydrogel.

A battery pack may include a housing, and a plurality of rechargeable batteries disposed inside the housing, wherein each of the rechargeable batteries includes a case, and an electrode assembly accommodated in the case, the electrode assembly includes a separator folded multiple times with bent portions alternately formed on one side and the other side thereof in a zigzag form, a first electrode inserted into an inner side of the bent portion on one side of the separator, and a second electrode inserted into an inner side of the bent portion on the other side of the separator, the separator, the first electrode, and the second electrode are fixed by a fixing member, and the fixing member includes a hydrogel.

BRIEF DESCRIPTION OF DRAWINGS

Features will become apparent to those of skill in the art by describing in detail exemplary embodiments with reference to the attached drawings, in which:

> FIG. 1 is a perspective view schematically illustrating a rechargeable battery according to an embodiment of the present invention;
> FIG. 2 is a view schematically illustrating an electrode assembly according to an embodiment of the present invention;
> FIG. 3 is an exploded view of the electrode assembly in FIG. 2;
> FIG. 4 is a cross-sectional view of the electrode assembly according to an embodiment of the present invention;
> FIG. 5 is a cross-sectional view of the electrode assembly according to an embodiment of the present invention; and
> FIG. 6 illustrates a battery pack with a plurality of rechargeable batteries according to an embodiment of the present invention.

DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this invention will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

Unless otherwise specified herein, a singular expression may also include a plural meaning. In addition, unless otherwise specified, "A or B" may mean "including A, including B, or including A and B."

As used herein, "a combination thereof" may mean a mixture, a laminate, a composite, a copolymer, an alloy, a blend, a reaction product, and the like of components.

Unless otherwise defined herein, the term "particle diameter" may refer to an average particle diameter. In addition, the particle diameter refers to an average particle diameter (D50), which means a diameter of particles with a cumulative volume of 50% by volume in a particle size distribution. The average particle diameter (D50) may be measured by a method well known to those skilled in the art, for example, by a particle size analyzer, or by a transmission electron microscopic image or a scanning electron microscopic image. Alternatively, after measuring using a measuring device using dynamic light-scattering, performing data analysis, counting the number of particles for each particle size range, and then calculating, the value of the average particle diameter (D50) may be easily obtained. Alternatively, the average particle diameter (D50) may be measured by a laser diffraction method. More specifically, when measured by the laser diffraction method, the average particle diameter (D50) may be measured by dispersing particles to be measured in a dispersion solvent and introducing the dispersed particles to a commercially available laser diffraction particle size measuring device (e.g., MT 3000 available from Microtrac, Ltd.) irradiating ultrasonic waves of about 28 kHz at a power of 60 W, and calculating an average particle diameter (D50) in the 50% standard of particle distribution in the measuring device.

Hereinafter, an electrode assembly for a rechargeable battery of the present invention, and a rechargeable battery including the electrode assembly will be described in detail.

Hereinafter, a description will focus on only the rechargeable lithium battery. However, the present invention may also be applicable to rechargeable batteries using different types of metal ions in addition to the rechargeable lithium battery.

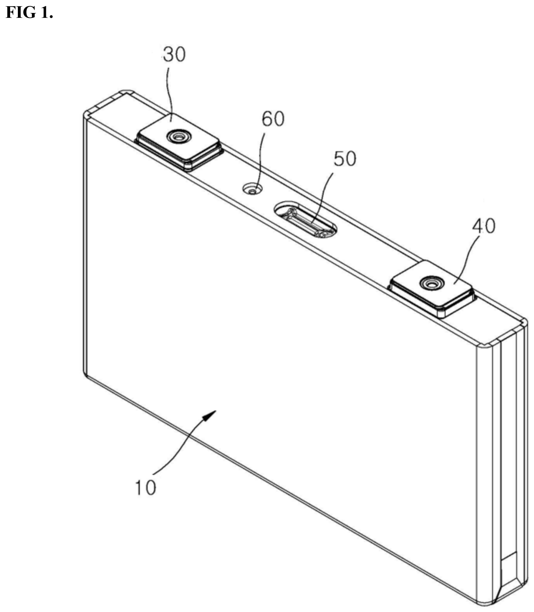

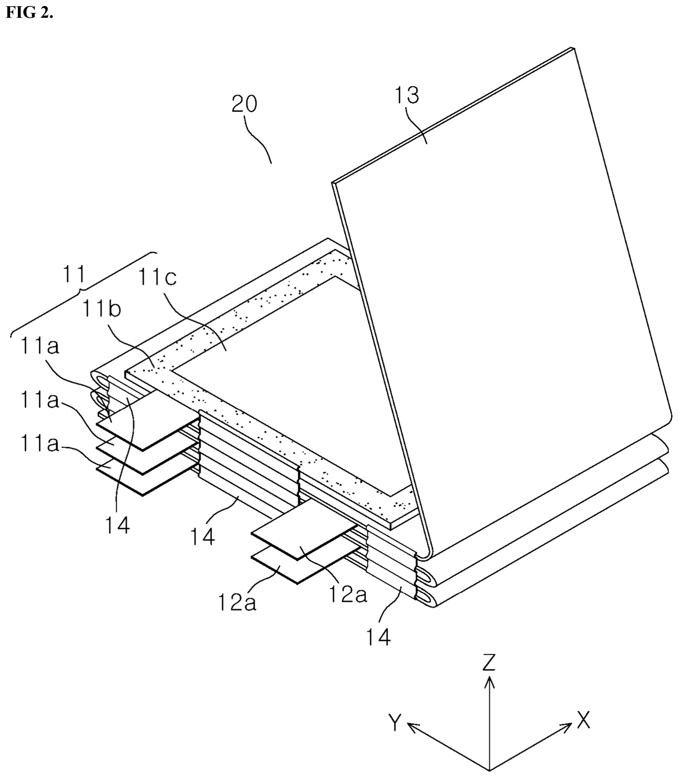

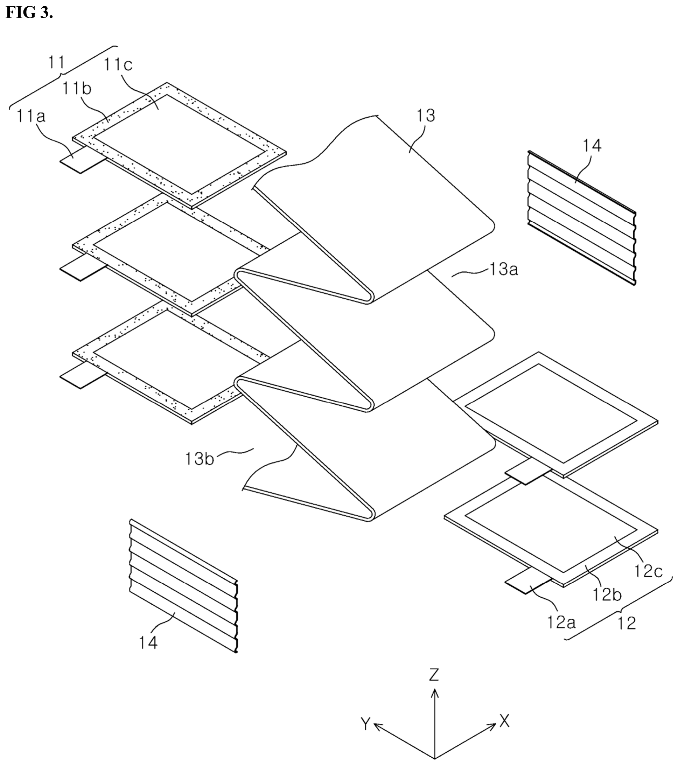

FIG. 1 is a perspective view schematically illustrating a rechargeable battery according to an embodiment of the present invention. FIG. 2 is a view schematically illustrating an electrode assembly in the rechargeable battery of FIG. 1 according to an embodiment of the present invention. FIG. 3 is an exploded view of the electrode assembly in FIG. 2.

Rechargeable battery

A rechargeable battery may be classified, e.g., as cylindrical, prismatic, pouch-type, and coin-type batteries, according to their shapes. FIG. 1 is a perspective view illustrating an example of a prismatic rechargeable battery according to an embodiment.

Referring to FIG. 1, the rechargeable battery includes a case 10 and an electrode assembly accommodated inside the case 10. The case 10 may further include a vent hole 50, an electrolyte inlet 60, a first terminal 30, and a second terminal 40. The case 10 may include a bottom portion, a front surface portion, a rear surface portion, a first side surface portion, and a second side surface portion, and may further include the vent hole 50, the electrolyte inlet 60, the first terminal 30, and the second terminal 40, which are formed on the side opposite to the bottom portion.

Referring to FIG. 2 and FIG. 3, the electrode assembly 20 accommodated in the case 10 of FIG. 1 may include a separator 13 between a first electrode 11 and a second electrode 12. According to an embodiment, the first electrode 11 may be a positive electrode and the second electrode 12 may be a negative electrode. According to another embodiment, the first electrode 11 may be the negative electrode and the second electrode 12 may be the positive electrode. According to an embodiment, the case 10 may include an electrolyte therein, and the electrode assembly 20 may be impregnated with the electrolyte.

Positive electrode

The positive electrode may include a current collector and a positive electrode active material layer formed on the current collector. The positive electrode active material layer includes a positive electrode active material and may further include a binder and/or a conductive material. As an example, the positive electrode may further include an additive that can serve as a sacrificial positive electrode.

A content of the positive electrode active material may range from 90 wt% to 99.5 wt% based on 100 wt% of the positive electrode active material layer, and a content of each of the binder and the conductive material may range from 0.5 wt% to 5 wt% based on 100 wt% of the positive electrode active material layer.

As the positive electrode active material, a compound (lithiated intercalation compound) that is capable of reversible intercalation and deintercalation of lithium may be used. For example, one or more of a composite oxide of lithium and a metal selected from cobalt, manganese, nickel, and a combination thereof may be used.

The composite oxide may be a lithium-transition metal composite oxide, e.g., lithium nickel oxide, lithium cobalt oxide, lithium manganese oxide, lithium iron phosphate compound, cobalt-free nickel-manganese oxide, or a combination thereof.

As an example, compounds represented by any one of the following chemical formulas may be used: $Li_aA_{1-b}X_bO_{2-c}D'_c$ ($0.90 \leq a \leq 1.8$, $0 \leq b \leq 0.5$, $0 \leq c \leq 0.05$); $Li_aMn_{2-b}X_bO_{4-c}D'_c$ ($0.90 \leq a \leq 1.8$, $0 \leq b \leq 0.5$, $0 \leq c \leq 0.05$); $Li_aNi_{1-8-c}Co_bX_cO_{2-\alpha}D'_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D'_\alpha$ ($0.90 \leq a \leq 1.8$, $0 \leq b \leq 0.5$, $0 \leq c \leq 0.5$, $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); and $Li_aFePO_4$ ($0.90 \leq a \leq 1.8$).

In the above chemical formulas, A may be Ni, Co, Mn, or a combination thereof; X may be Al, Ni, Co, Mn, Cr, Fe, Mg, Sr, V, a rare-earth element or a combination thereof; D may be O, F, S, P, or a combination thereof; G may be Al, Cr, Mn, Fe, Mg, La, Ce, Sr, V, or a combination thereof; and $L^1$ may be Mn, Al, or a combination thereof.

As an example, the positive electrode active material may be a high-nickel positive electrode active material having a nickel content of greater than or equal to 80 mol %, greater than or equal to 85 mol %, greater than or equal to 90 mol %, greater than or equal to 91 mol %, or greater than or equal to 94 mol % and less than or equal to 99 mol % based on 100 mol % of the metal excluding lithium in the lithium-transition metal composite oxide. The high-nickel positive electrode active material may be capable of realizing high capacity and can be applied to high-capacity and high-density rechargeable batteries.

The binder serves to adhere positive electrode active material particles to each other well and also to adhere the positive electrode active material to the current collector well. Representative examples of the binder include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, nylon, or the like.

The conductive material is used to provide conductivity to the electrode, and any material that does not cause a chemical change and is electrically conductive may be used in the configured battery. Examples of the conductive material may include a carbon material such as natural graphite, artificial graphite, carbon black, acetylene black, Ketjen black, carbon fibers, carbon nanofibers, or carbon nanotubes; a metal material in the form of a metal powder or metal fiber including copper, nickel, aluminum, silver, or the like; a conductive polymer such as a polyphenylene derivative; or a mixture thereof.

Al may be used as the current collector.

Negative electrode

The negative electrode includes a current collector and a negative electrode active material layer located on the current collector. The negative electrode active material layer includes a negative electrode active material and may further include a binder and/or a conductive material.

For example, the negative electrode active material layer may include 90 wt% to 99 wt% of the negative electrode active material, 0.5 wt% to 5 wt% of the binder, and 0 wt% to 5 wt% of the conductive material.

The negative electrode active material may include a material capable of reversible intercalation and deintercalation of lithium ions, a lithium metal, a lithium metal alloy, a material capable of doping and dedoping lithium, or a transition metal oxide.

The material capable of reversible intercalation and deintercalation of lithium ions is a carbon negative electrode active material, e.g., crystalline carbon, amorphous carbon, or a combination thereof. Examples of the crystalline carbon may include graphite such as amorphous, plate shape, flake, spherical shape or fibrous natural graphite or artificial graphite. Examples of the amorphous carbon may include soft carbon or hard carbon, a mesophase pitch carbonized product, calcined coke, and the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

A Si negative electrode active material or a Sn negative electrode active material may be used as the material capable of doping and dedoping lithium. The Si negative electrode active material may include silicon, a silicon-carbon composite, SiOx (0 < x < 2), a Si-Q alloy (where, Q is selected from an alkali metal, an alkaline-earth metal, a Group 13 element, a Group 14 element (excluding Si), a Group 15 element, a Group 16 element, a transition metal, a rare-earth element, and a combination thereof), or a combination thereof. The Sn negative electrode active material may be Sn, $SnO_2$, a Sn alloy, or a combination thereof.

The silicon-carbon composite may be a composite of silicon and amorphous carbon. According to an embodiment, the silicon-carbon composite may be in the form of silicon particles and amorphous carbon coated on the surface of the silicon particles. For example, the silicon-carbon composite may include a secondary particle (core) in which silicon primary particles are agglomerated and an amorphous carbon coating layer (shell) located on the surface of the secondary particle. The amorphous carbon may also be located between the silicon primary particles, such that, for example, the silicon primary particles are coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si negative electrode active material or the Sn negative electrode active material may be used by being mixed with a carbon negative electrode active material.

The binder serves to adhere negative electrode active material particles to each other well and also to adhere the negative electrode active material to the current collector well. A non-aqueous binder, an aqueous binder, a dry binder, or a combination thereof may be used as the binder.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as the negative electrode binder, a cellulose compound capable of imparting viscosity may be further included. As the cellulose compound, one or more of carboxymethyl cellulose, hydroxypropylmethyl cellulose, methyl cellulose, or alkali metal salts thereof may be used in combination. Na, K, or Li may be used as the alkali metal.

The dry binder is a polymer material capable of being fiberized, e.g., polytetrafluoroethylene, polyvinylidene fluoride, a polyvinylidene fluoride-hexafluoropropylene copolymer, a polyethylene oxide, or a combination thereof.

The conductive material is used to provide conductivity to the electrode, and any material that does not cause a chemical change and is electrically conductive may be used in the configured battery. Examples of the conductive material may include a carbon material such as natural graphite, artificial graphite, carbon black, acetylene black, Ketjen black, carbon fibers, or carbon nanofibers; a metal material in the form of a metal powder or metal fiber including copper, nickel, aluminum, silver, or the like; a conductive polymer such as a polyphenylene derivative; or a mixture thereof.

The negative electrode current collector may be selected from a copper foil, a nickel foil, a stainless steel foil, a titanium foil, a nickel foam, a copper foam, a polymer substrate coated with a conductive metal, and a combination thereof.

Separator

The separator may be made of polyethylene, polypropylene, polyvinylidene fluoride, or a multilayer film of two or more layers thereof. The separator may also be made of a mixed multilayer film, such as a polyethylene/polypropylene double-layered separator, a polyethylene/polypropylene/polyethylene three-layered separator, and a polypropylene/polyethylene/polypropylene three-layered separator.

The separator may include a porous substrate, and a coating layer including an organic material, an inorganic material, or a combination thereof located on one surface or both surfaces of the porous substrate.

The porous substrate may be a polymer film formed of a polymer, or a copolymer or a mixture of two or more selected from polyolefins such as polyethylene, polypropylene, and the like, polyesters such as polyethylene terephthalate, polybutylene terephthalate, and the like, polyacetal, polyamide, polyimide, polycarbonate, polyetheretherketone, polyaryletherketone, polyetherimide, polyamideimide, polybenzimidazole, polyether sulfone, a polyphenylene oxide, a cyclic olefin copolymer, polyphenylene sulfide, polyethylene naphthalate, glass fibers, Teflon, and polytetrafluoroethylene.

The organic material may include a polyvinylidene fluoride polymer or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof.

The organic and inorganic materials may be present by being mixed in one coating layer or may be present in a form in which a coating layer including organic materials and a coating layer including inorganic materials are stacked.

Electrolyte

The electrolyte includes a non-aqueous organic solvent and a lithium salt.

The non-aqueous organic solvent serves as a medium through which ions taking part in the electrochemical reaction of a battery can move.

The non-aqueous organic solvent may be a carbonate solvent, an ester solvent, an ether solvent, a ketone solvent, an alcohol solvent, an aprotic solvent, or a combination thereof.

The carbonate solvent may include dimethyl carbonate (DMC), diethyl carbonate (DEC), dipropyl carbonate (DPC), methylpropyl carbonate (MPC), ethylpropyl carbonate (EPC), ethylmethyl carbonate (MEC), ethylene carbonate (EC), propylene carbonate (PC), butylene carbonate (BC), and the like.

The ester solvent may include methyl acetate, ethyl acetate, n-propyl acetate, dimethyl acetate, methyl propionate, ethyl propionate, decanolide, mevalonolactone, valerolactone, caprolactone, and the like.

The ether solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone solvent may include cyclohexanone and the like. The alcohol solvent may include ethyl alcohol, isopropyl alcohol, and the like, and the aprotic solvent may include nitriles such as R-CN (where R is a C2 to C20 linear, branched, or cyclic hydrocarbon group and includes a double bond, an aromatic ring, or an ether bond), and the like; amides such as dimethyl formamide; dioxolanes such as 1,3-dioxolane and 1,4-dioxolane; sulfolanes; and the like.

The non-aqueous organic solvents may be used alone or in combination of two or more.

In addition, when the carbonate solvent is used, a cyclic carbonate and a chain carbonate may be mixed and used, and the cyclic carbonate and the chain carbonate may be mixed in a volume ratio of 1:1 to 1:9.

The lithium salt is a material that is dissolved in the organic solvent and serves as a source of lithium ions in a battery, enables a basic operation of a rechargeable battery, and improves the movement of the lithium ions between positive and negative electrodes. Representative examples of the lithium salt may include one or two or more selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl) imide (LiFSI)), $LiC_4F_9SO_3$, $LiN(C_xF_{2x+1}SO_2)(C_yF_{2y+1}SO_2)$ (where, x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

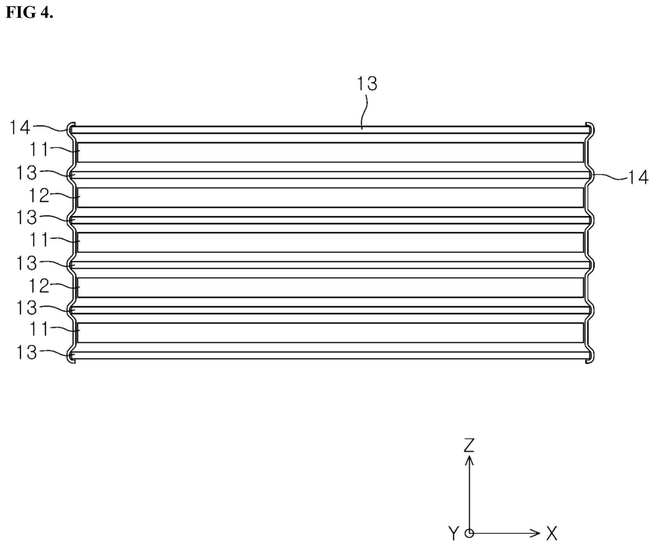

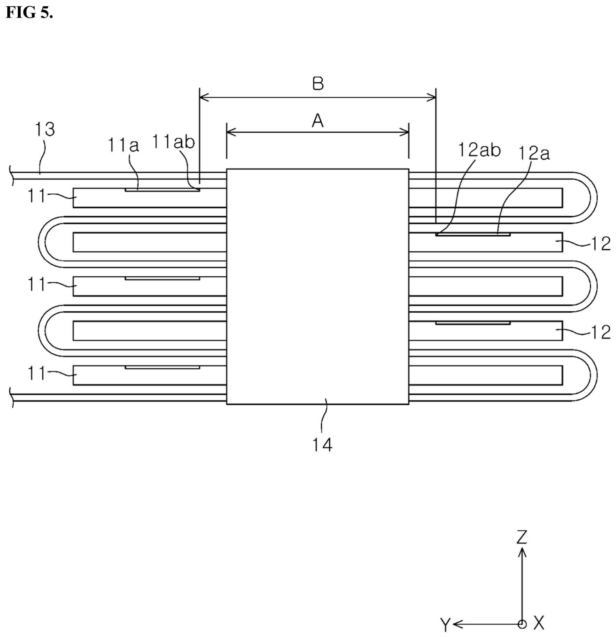

FIG. 2 is a view schematically illustrating the electrode assembly according to an embodiment of the present invention. FIG. 3 is an exploded perspective view of the electrode assembly according to an embodiment of the present invention. FIG. 4 is a cross-sectional view of the electrode assembly in FIG. 3 in the XZ-plane according to an embodiment of the present invention. FIG. 5 is a cross-sectional view of the electrode assembly in FIG. 3 in the YZ-plane according to an embodiment of the present invention. In FIGS. 2 to 5, the X-axis represents a width direction of the electrode assembly 20, the Y-axis represents a longitudinal direction of the electrode assembly 20, and the Z-axis represents a thickness direction of the electrode assembly.

Referring to FIGS. 2-5, the electrode assembly 20 includes the first electrode 11, the second electrode 12, and the separator 13. The first electrode 11 may be a positive electrode and the second electrode 12 may be a negative electrode, or conversely, the first electrode 11 may be the negative electrode and the second electrode 12 may be the positive electrode.

The first electrode 11 may include a first tab portion 11a, which is formed to protrude from one side surface thereof, a first current collector 11b, and a first active material layer 11c. The first current collector 11b and the first active material layer 11c may be the current collector and the active material layer described above, respectively.

The first tab portion 11a may be attached to one surface of an uncoated portion of the first current collector 11b. For example, the first tab portion 11a may be attached to one surface of the uncoated portion by welding, using one or more of ultrasonic welding, resistance welding, and laser welding.

The second electrode 12 may include a second tab portion 12a, which is formed to protrude from one side surface thereof, a second current collector 12b, and a second active material layer 12c. The second current collector 12b and the second active material layer 12c may be the current collector and the active material layer described above, respectively.

The second tab portion 12a may be attached to one surface of an uncoated portion of the second current collector 12b. For example, the second tab portion 12a may be attached to one surface of the uncoated portion by welding, using one or more of ultrasonic welding, resistance welding, and laser welding.

In the electrode assembly 20, the separator 13 is folded with bent portions alternately formed on one side and the other side in a zigzag form (e.g., the bent portions of the separator 13 may be on a first side 13a and a second side 13b of the separator 13 to define a zigzag shape). The first electrode 11 is inserted into an inner side of the bent portion on one side of the separator 13, while the second electrode 12 is inserted into an inner side of the bent portion on the other side of the separator 13.

That is, the separator 13 may be disposed to surround outer side surfaces of the first electrode 11 or the second electrode 12, and the first and second electrodes, together with the separator folded in a zigzag form, may form a Z-stacked electrode assembly. The bent portion on the other side may be formed to face the bent portion on one side.

In a comparative electrode assembly, the first electrode and the second electrode may be sequentially stacked by the separator having the bent portions. During the charging and discharging of the battery, misalignment of the first electrode, the separator, and the second electrode in the electrode assembly may occur due to the expansion and contraction of the electrodes, an increase in the number of stacked layers of the first and second electrodes, and/or an increase in area of the first and second electrodes.

In this regard, the electrode assembly 20, according to example embodiments, is fixed by a fixing member 14 that fixes the separator 13, the first electrode 11, and the second electrode 12. The fixing member 14 includes a hydrogel.

In detail, the fixing member 14 including the hydrogel fixes the separator 13, the first electrode 11,

and the second electrode 12. For example, the fixing member 14 including the hydrogel may fix the separator 13, the first electrode 11, and the second electrode 12 by being laminated to side surfaces of the separator 13, the first electrode 11, and the second electrode 12. According to an embodiment, the fixing member 14 including the hydrogel may fix the separator 13, the first electrode 11, and the second electrode 12 by being located between the bent portions on one side and the other side of the separator 13. For example, referring to FIG. 2, the fixing member 14 may be on a same side as the tab portions, e.g., on opposite sides of the electrode assembly 20 along the X-axis. For example, referring to FIGS. 2 and 4, the fixing member 14 may include a portion that overlaps an uppermost surface of the electrode assembly 20 (i.e., an uppermost surface of the top bent portion of the separator 13) and a lowermost surface of the electrode assembly 20 (i.e., a lowermost surface of the bottom bent portion of the separator 13) to secure and fix the entire Z-stack in a stationary state.

According to an embodiment, as shown in FIGS. 2 and 3, the fixing member 14 including the hydrogel may fix the separator 13, the first electrode 11, and the second electrode 12 by being located between the first tab portion 11a of the first electrode 11 and the second tab portion 12a of the second electrode 12. By being located between the first tab portion 11a and the second tab portion 12a, the fixing member 14 may increase the degree of adhesion to the first electrode 11, the separator 13, and the second electrode 12 even when used alone.

The fixing member 14 including the hydrogel exhibits adhesiveness. Specifically, the hydrogel can fix the separator 13, the first electrode 11, and the second electrode 12 by exhibiting excellent adhesion to both the electrodes and the separator in a wet environment, including the impregnation of the electrolyte in the case.

In particular, as described above, the first electrode 11, the separator 13, and the second electrode 12 are formed of different materials from each other. In addition, the first electrode 11, the separator 13, and the second electrode 12 are stacked multiple times in the thickness direction of the electrode assembly 20, and the first electrode 11 and the second electrode 12 may repeatedly expand and contract during the charging and discharging of the electrode assembly 20. Thus, the fixing member 14 including the hydrogel must exhibit excellent adhesion to all of the above-described first electrode 11, separator 13, and second electrode 12 even in a wet environment including the electrolyte, and must withstand a repetitive process of expansion and contraction without detaching from the first electrode 11, separator 13, or second electrode 12.

According to an embodiment, in the fixing member 14 including the hydrogel, the hydrogel may be formed of a composition including a polymer (copolymer) with a weight-average molecular weight of 200 kDa or more. In the above-described range, the fixing member 14 prevents misalignment of the electrode assembly 20 by not being detached during the repetitive process of expansion and contraction, thereby increasing structural stability of the battery. In addition, in the above-described range, the fixing member 14 may be advantageous for maintaining its shape by not being easily decomposed in a wet environment including an electrolyte.

For example, the polymer in the hydrogel of the fixing member 14 may have a weight-average molecular weight ranging from 200 to 500 kDa. In the above-described range, the fixing member is not detached during the repetitive process of expansion and contraction and prevents the weight-average molecular weight from becoming excessively high, which can reduce the adhesion to the first electrode, the separator, and the second electrode.

According to an embodiment, in the fixing member 14 including the hydrogel, the hydrogel may be formed of a polymer with a weight-average molecular weight of 200 kDa or more, e.g., in a range of 200 to 500 kDa. In the above-described range, the hydrogel may form a crosslinked structure in an appropriate range, which blocks foreign substances, such as welding spatter generated during the welding of the first tab portion and/or the second tab portion, from penetrating the fixing member and is thus advantageous for preventing contamination of the first electrode 11, the separator 13, and the second electrode 12.

Here, the "weight-average molecular weight" may be determined as a polystyrene-equivalent value using gel permeation chromatography.

According to an embodiment, the polymer may include a functional group that is crosslinkable by an active energy ray (e.g., electromagnetic radiation transferred through electromagnetic waves). The functional group that is crosslinkable by the active energy ray, compared to a functional group crosslinkable by heat (e.g., transfer of thermal energy through conduction or convection due to difference in temperature), allows the fixing member 14 to be formed through short-term exposure to the active energy ray, thereby increasing the adhesion of the fixing member 14 to each of the first electrode 11, the separator 13, and the second electrode 12. Particularly, heat is generated during the charging and discharging of the battery, and it is generally common for adhesion to decrease due to heat. However, the functional group crosslinkable by the active energy ray may reduce the extent to which the peel strength is reduced even at high temperatures, thereby preventing misalignment of the electrode assembly 20 and improving the reliability of the battery.

The functional group crosslinkable by the active energy ray may include one or more of an acrylate group, a methacrylate group, a vinyl group, an epoxy group, and an allyl group.

According to an embodiment, the polymer may include a non-ionic polymer having one or more functional groups crosslinkable by active energy rays. Accordingly, the hydrogel can enhance the operational reliability of the battery by not influencing changes in the composition of the electrolyte within the battery.

For example, the polymer may include one or more of saccharides (e.g., cellulose, chitosan, starch, rubber, and the like), polyvinyl, polyallyl, polyether, polyamine, polyacrylate, polyacrylamide, polymethacrylate, polymethacrylamide, polyurethane, polycarbonate, polyamide, and polyester, but the present invention is not limited thereto.

The composition including the hydrogel may further include a crosslinking agent.

The crosslinking agent may enhance the degree of crosslinking in the three-dimensional network structure of the hydrogel, thereby enabling the fixing member to maintain its shape without decomposing, even in the electrolyte, while preventing misalignment of the electrode assembly and improving the structural stability of the battery.

According to an embodiment, the crosslinking agent may include a compound having a functional group that is crosslinkable by two or more active energy rays. The functional group crosslinkable by the active energy rays is the same as described above. The crosslinking agent may be of any suitable type, e.g., the crosslinking agent may include one or more of hydroxyethyl (meth) acrylate, dimethylaminoethyl (meth)acrylate, hydroxypropyl (meth)acrylamide, N-isopropyl (meth)acrylamide, N,N-dimethyl (meth)acrylamide, polyethylene glycol methyl ether (meth)acrylate, polyethylene glycol methyl ether (meth)acrylamide, N,N'-methylene bisacrylamide, polyethylene glycol di(meth)acrylate, polyethylene glycol di(meth)acrylamide, polyethylene glycol divinyl (allyl) ether, 4-vinyl pyridine, vinyl pyrrolidone, allylamine, and polyethylene glycol methyl vinyl (allyl) ether.

The composition may include a photoinitiator. For example, a benzophenone compound may be used as the photoinitiator.

The benzophenone compound may facilitate the formation of a three-dimensional network structure in the fixing member, which may be advantageous for increasing its permeability to the electrolyte. This can enhance the contact between the first and second electrodes and the electrolyte, thereby improving the operational stability of the battery.

The contents of the polymer, the crosslinking agent, and the photoinitiator in the composition may be adjusted according to the intended number of layers of the first and second electrodes to be stacked, or the like.

The composition may further include any suitable additives known to be included in the hydrogel. The additives may include one or more of an adhesion promoter, a crosslinking catalyst, and a heterogeneous tackifying resin. According to an embodiment, an electrolyte salt may be present in the hydrogel at 1 wt% or less, e.g., in a range of 0 to 1 wt% or 0 wt%, based on 100 wt% of the hydrogel. In the above-described range, it is possible to prevent the peel strength of the fixing member including the hydrogel from being reduced due to the electrolyte salt during the charging and discharging of the battery.

Here, the term "electrolyte salt" encompasses electrolyte salts commonly used in batteries and may include the above-described lithium salt.

According to an embodiment, the fixing member including the hydrogel may be insoluble in the electrolyte. Thus, even after prolonged use in the battery, the fixing member including the hydrogel does not dissolve, so that the structural stability of the first electrode, the separator, and the second electrode may be maintained for a long period of time.

Here, the term "insoluble" means that a value of Equation 1 below may be 1% or less, e.g., in a range of 0 to 1% or 0%,

[Equation 1]

$$\text{weight loss ratio} = ((W1 - W2) / W1) \times 100$$

In Equation 1, W1 represents an initial weight of the fixing member 14, and W2 represents a weight of the fixing member 14 after being immersed in the electrolyte at room temperature or high temperature for 100 hours. Here, the room temperature may range from 20 °C to 30 °C, and the high temperature may range from 40 °C to 200 °C.

Here, the electrolyte may be an electrolyte including 0.1M to 2M of $LiPF_6$ and a non-aqueous organic solvent, which includes ethylene carbonate (EC), ethyl methyl carbonate (EMC), and dimethyl carbonate (DMC) in a volume ratio of 1:2 to 3:2 to 3.

The fixing member 14 including the hydrogel may be a continuous film or sheet. Here, the term "continuous film or sheet" refers to being continuously formed from the topmost surface to the bottommost surface of the laminate of the first electrode 11, the separator 13, and the second electrode 12. This may facilitate enhancing the structural stability of the battery by preventing the misalignment of the electrode plates of the electrode assembly 20.

According to an embodiment, a thickness of the fixing member 14 including the hydrogel may range from 70 μm to 300 μm, e.g., from 100 μm to 300 μm. In the above-described range, the fixing member 14 may maintain an appropriate level of adhesion to the first electrode 11, the separator 13, and the second electrode 12, even during charging and discharging, to prevent detachment from the electrodes. In addition, interference with other parts of the electrode assembly 20 may be avoided.

Referring to FIGS. 2, 3, and 5 again, the fixing member 14 including the hydrogel may be located between the first tab portion 11a of the first electrode 11 and the second tab portion 12a of the second electrode 12.

According to an embodiment, a width A (e.g., along the Y-axis) of the fixing member 14 including the hydrogel may be 80% to 100%, e.g., 90% to 100% or 100%, of a distance B (e.g., along the Y-axis) between a first end 11ab of the first tab portion 11a of the first electrode 11 and a first end 12ab of the second tab portion 12a of the second electrode 12. For example, referring to FIG. 5, the first end 11ab may be an end of the first tab portion 11a that is closest to the fixing member 14, and the first end 12ab may be an end of the second tab portion 12a that is closest to the fixing member 14 (e.g., the first end 11ab of the first tab portion 11a and the first end 12ab of the second tab portion 12a may be oriented to face the fixing member 14 and each other). In other words, "a first end of the first tab portion" and "a first end of the second tab portion" each refers to an end that is closer to the centerline in the longitudinal direction (Y-axis direction in FIG. 5) of the electrode assembly.

In the above-described range, the fixing member 14 may maintain an appropriate level of adhesion to the first electrode 11, the separator 13, and the second electrode 12, even during charging and discharging, to prevent detachment from the electrodes. For example, the width A of the fixing member may range from 10 mm to 100 mm, e.g., from 30 mm to 100 mm, and the distance B may range from 30 mm to 150 mm, e.g., from 50 mm to 150 mm.

According to an embodiment, the fixing member 14 including the hydrogel may be stably attached to the laminate of the first electrode 11, the separator 13, and the second electrode 12 by having a predetermined area ratio. Here, the term "area ratio" refers to a ratio of an area (e.g., measured along the Y-axis and the Z-axis) of the fixing member 14 including the hydrogel to an area of a rectangle formed by the distance B (e.g., measured along the Y-axis) between the first end 11ab of the first tab portion 11a and the first end 12ab of the second tab portion 12a of the second electrode 12, and a thickness (e.g., measured along the Z-axis) of the electrode assembly 20. In an embodiment, the area ratio may range from 80% to 100%, e.g., from 90% to 100% or 100%. In the above-described range, the fixing member 14 exhibits excellent adhesion to the electrode plates, thereby preventing misalignment of the plates.

Referring to FIGS. 2 to 4 again, the fixing member 14 may be a single plane (e.g., in a shape of a flat sheet) or may have a plurality of convex surfaces. For example, referring to FIGS. 3 and 4, the convex surfaces may be sequentially formed (e.g., in a wave form) in the thickness direction (e.g., the Z-axis) of the electrode assembly 20 and may be formed convexly to correspond to the bent portions on one side or the other side of the separator 13, respectively. For example, referring to FIG. 4, the separator 13 may extend (e.g., protrude) along the X-axis beyond each of the first and second electrodes 11 and 12 on each side (e.g., along the X-axis) of the electrode assembly 20, so the fixing member 14 may extend continuously (e.g., and conformally) along the stacked edges of the first electrode 11, separator 13, and second electrode 12 to have convex shapes in regions overlapping (e.g., covering) the protruding portions of the separator 13. For example, referring to FIG. 4, a cross-section of the fixing member 14 in the XZ-plane may have a shape of alternating linear lines and convex shapes (e.g., overlapping respective electrodes and separators). The convex surfaces can further increase the adhesion of the fixing member 14 to the electrode assembly 20, which includes the first electrode 11, the second electrode 12, and the separator 13.

For example, referring to FIG. 2, the fixing member 14 including the hydrogel may be located between the first tab portion 11a of the first electrode 11 and the second tab portion 12a of the second electrode 12 (e.g., the fixing member 14 may be between the first ends of the first tab portion 11a and the second tab portion 12a). In another example, the fixing member 14 including the hydrogel may be additionally or alternatively located in at least one of a space between the first tab portion 11a of the first electrode 11 and the bent portion on one side of the separator 13, and a space between the second tab portion 12a of the second electrode 12 and the bent portion on the other side of the separator 13 (e.g., the fixing member 14 may be between the second end of either of the first tab portion 11a and the second tab portion 12a and a bent portion of a corresponding side of the separator 13). This can further increase the structural stability of the electrode assembly 20 by increasing the area of the fixing member 14 attached to a side surface of the electrode assembly 20.

The fixing member 14 including the hydrogel may be manufactured by any suitable method. For example, the fixing member 14 including the hydrogel may be manufactured by preparing a composition capable of forming a hydrogel, masking the first tab portion 11a and the second tab portion 12a on the side surfaces of the electrode assembly 20, and then applying a composition capable of forming the hydrogel, followed by drying and curing. For example, referring to FIGS. 2 and 5, the fixing member 14 may extend along an entire thickness of the electrode assembly along the Z-axis.

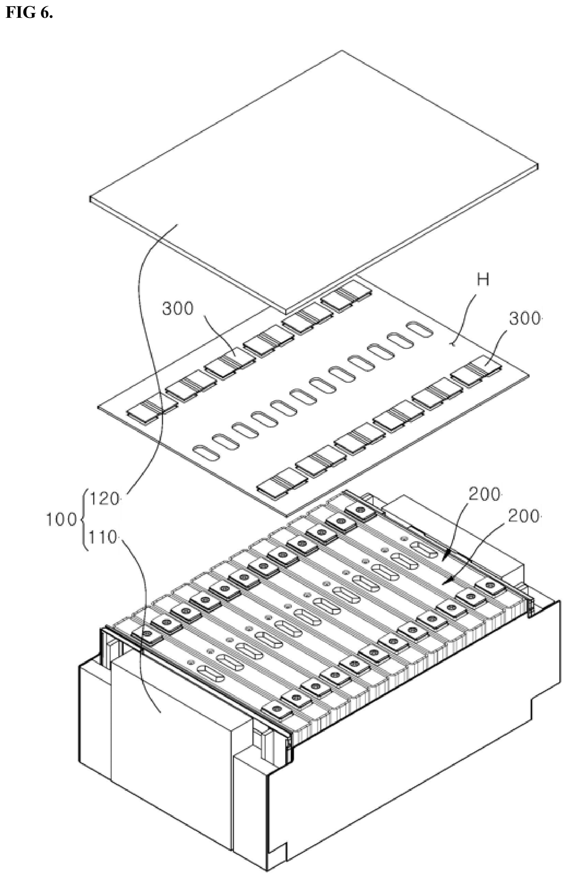

FIG. 6 illustrates a battery pack.

Referring to FIG. 6, a battery pack may include a housing 100, a rechargeable battery 200, and a bus bar 300. The rechargeable battery 200 may have the structure described previously with reference to FIGS. 1-5 (i.e., rechargeable battery 200 may include the fixing member 14 described previously).

The housing 100 may form a schematic exterior of the battery pack, and may provide a space in which the rechargeable battery 200 may be accommodated. The housing 100 according to the present embodiment may include a housing body 110 and a cover 120.

The housing body 110 may be formed to have a box shape, with an empty interior and one open side. For example, a cross-sectional shape of the housing body 110 may be quadrangular, as shown in FIG. 6, or may be changed in design to have various shapes, e.g., a polygonal shape, a circular shape, and an oval shape.

The cover 120 may be coupled to the housing body 110 and may close an internal space of the housing body 110. As an example, the cover 120 may be formed to have a substantially plate shape and may be disposed to face the open side of the housing body 110. The cover 120 may be fixed to the housing body 110 by various types of coupling methods such as bolting, welding, and fitting.

The rechargeable battery 200 may function as a unit structure, which stores and supplies power, in the battery pack. The rechargeable battery 200 may be disposed inside the housing 100.

A plurality of rechargeable batteries 200 may be provided. The plurality of rechargeable batteries 200 may be arranged in two or more rows along at least one of a longitudinal direction or a width direction of the housing 100. In FIG. 6, a case in which the plurality of rechargeable batteries 200 are arranged in a single row in the longitudinal direction of the housing 100 is illustrated as an example, but the arrangement form of the plurality of rechargeable batteries 200 may be variously changed in design. The plurality of rechargeable batteries 200 may be arranged side by side. The number of rechargeable batteries 200 may be variously changed in design depending on the size, shape, or the like of the housing 100.

The plurality of rechargeable batteries 200 may be electrically connected by the bus bar 300. The bus bar 300 according to the present embodiment may be disposed between the cover 120 and the rechargeable battery 200. A plurality of bus bars 300 may be provided. Each of the bus bars 300 may connect a pair of adjacent rechargeable batteries 200 in series or parallel.

As an example, the first terminal 30 of one of the pair of adjacent rechargeable batteries 200 and the second terminal 40 of the other one of the pair of adjacent rechargeable batteries 200 may be disposed to face each other in the longitudinal direction of the housing 100. That is, a front surface portion of one of the adjacent rechargeable batteries 200 may be disposed to face a rear surface portion of the other one of the adjacent rechargeable batteries 200.

In one example, both sides of the bus bar 300 may be connected to the first terminal 30 of one of the pair of adjacent rechargeable batteries 200 and the second terminal 40 of the other one of the pair of adjacent rechargeable batteries 200, respectively. Accordingly, the plurality of rechargeable batteries 200 may be connected in series with each other by the bus bar 300. However, it is also possible that the both sides are respectively connected to the first terminal 30 of one of the pair of adjacent rechargeable batteries 200 and the second terminal 40 of the other one of the pair of adjacent rechargeable batteries 200, or that both sides are respectively connected to the second terminal 40 of one of the pair of adjacent rechargeable batteries 200 and the second terminal 40 of the other one of the pair of adjacent rechargeable batteries.

The bus bar 300 may be formed of an electrically conductive material, such as copper, aluminum, nickel, or the like. The specific shape of the bus bar 300 may be variously changed in design as long as it can electrically connect the adjacent rechargeable batteries 200.

The plurality of bus bars 300 may be supported inside the housing 100 by a bus bar holder H. The bus bar holder H according to the present embodiment may be formed to have the shape of a flat plate. The bus bar holder H may be disposed between the cover 120 and the rechargeable batteries 200. The bus bars 300 may be fixed to the bus bar holder H by various types of coupling methods, such as fitting, bolting, injection, and the like. The bus bar holder H may include a polymer compound material that is electrically insulative.

According to the present invention, misalignment of electrode plates in a large-area electrode assembly may be prevented by using a fixing member that exhibits high adhesion to the electrode plates in a wet environment in an electrolyte, thereby increasing structural stability of a battery. Further, according to the present invention, the operational stability of a battery may be increased by using a fixing member that exhibits high permeability to an electrolyte to increase contact between electrodes and the electrolyte. Also, according to the present invention, a fixing member can increase the safety of a battery by blocking the ingress of external foreign substances generated during welding.

By way of summation and review, an electrode assembly, in which electrode plates such as a positive electrode and a negative electrode are stacked to face each other with a separator therebetween, may experience misalignment of the electrode plates as the number of stacks increases and the area of the electrode plate becomes larger. Accordingly, various methods are being developed to prevent the misalignment of the electrode plates.

For example, the present invention is directed to providing an electrode assembly that includes a fixing member with excellent adhesion to electrode plates and high permeability to an electrolyte in a wet environment in an electrolyte, and/or a rechargeable battery including such an electrode assembly.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. An electrode assembly (20), comprising:

   a separator (13) folded multiple times with bent portions alternating on a first side (13a) and a second side (13b) thereof in a zigzag form;
   a first electrode (11) inserted into an inner side of each of the bent portions on the first side (13a) of the separator (13);
   a second electrode (12) inserted into an inner side of each of the bent portions on the second side (13b) of the separator (13); and
   a fixing member (14) fixing the separator (13), the first electrode (11), and the second electrode (12), the fixing member including a hydrogel.

2. The electrode assembly (20) as claimed in claim 1, wherein the fixing member (14) is between the bent portions on the first side (13a) and the bent portions on the second side (13b) of the separator (13).

3. The electrode assembly (20) as claimed in claim 1 or 2, wherein:

   the first electrode (11) includes a first tab portion (11a) protruding from one side surface thereof,
   the second electrode (12) includes a second tab portion (12a) protruding from one side surface thereof, and
   the fixing member (14) is between the first tab portion (11a) and the second tab portion (12a).

4. The electrode assembly (20) as claimed in claim 3, wherein a width of the fixing member (14) is 80% to 100% of a distance between one end of the first tab portion (11a) of the first electrode (11) and one end of the second tab portion (12a) of the second electrode (12).

5. The electrode assembly (20) as claimed in any of the previous claims, wherein the fixing member (14) is a single plane or has a plurality of convex surfaces, the plurality of convex surfaces preferably corresponding to the bent portions on at least one of the first side (13a) and the second side (13b) of the separator (13).

6. The electrode assembly (20) as claimed in any of the claims 3 to 5, wherein a ratio of an area of the fixing member (14) to an area of a rectangle defined by a distance between one end of the first tab portion (11a) of the first electrode (11) and one end of the second tab portion (12a) of the second electrode (12), and a thickness of the electrode assembly (20) ranges from 80% to 100%.

7. The electrode assembly (20) as claimed in any of the claims 3 to 6, wherein the fixing member (14) is further located in at least one of a space between the first tab portion (11a) of the first electrode (11) and the bent portion on one side of the separator (13), and a space between the second tab portion (12a) of the second electrode (12) and the bent portion on the other side of the separator (13).

8. The electrode assembly (20) as claimed in any of the claims 3 to 7, wherein:

the first electrode (11) includes the first tab portion (11a), a first current collector (11b), and a first active material layer (11c), the first tab portion (11a) being welded to a surface of an uncoated portion of the first current collector (11b), and

the second electrode (12) includes the second tab portion (12a), a second current collector (12b), and a second active material layer (12c), the second tab portion (12a) being welded to a surface of an uncoated portion of the second current collector (12b).

9. The electrode assembly (20) as claimed in any of the previous claims, wherein the hydrogel includes a polymer with a weight-average molecular weight of 200 kDa or more.

10. The electrode assembly (20) as claimed in claim 9, wherein the polymer has a functional group crosslinkable by an active energy ray, optionally wherein the functional group includes one or more of an acrylate group, a methacrylate group, a vinyl group, an epoxy group, and an allyl group.

11. The electrode assembly (20) as claimed in claim 9, wherein the polymer is nonionic.

12. The electrode assembly (20) as claimed in any of the previous claims, wherein the hydrogel further includes a crosslinking agent, the crosslinking agent including a functional group crosslinkable by an active energy ray, optionally wherein the hydrogel further includes a photoinitiator, the photoinitiator including a benzophenone compound, optionally wherein the hydrogel includes an electrolyte salt in an amount of 1 wt% or less, based on 100 wt% of the hydrogel.

13. The electrode assembly (20) as claimed in any of the previous claims, wherein the fixing member (14) is insoluble in an electrolyte.

14. The electrode assembly (20) as claimed in any of the previous claims, wherein the fixing member (14) is a continuous film or sheet, optionally wherein a thickness of the fixing member (14) ranges from 70 $\mu$m to 300 $\mu$m.

15. A rechargeable battery (200), comprising:

a case (10); and
an electrode assembly (20) accommodated in the case, the electrode assembly (20) including:

a separator (13) folded multiple times with bent portions alternating on a first side (13a) and a second side (13b) thereof in a zigzag form,
a first electrode (11) inserted into an inner side of each of the bent portions on the first side (13a) of the separator (13),
a second electrode (12) inserted into an inner side of each of the bent portions on the second side (13b) of the separator (13), and
a fixing member (14) fixing the separator (13), the first electrode (11), and the second electrode (12), the fixing member (14) including a hydrogel.

**FIG 1.**

**FIG 2.**

**FIG 3.**

FIG 4.

**FIG 5.**

FIG 6.

Europäisches
Patentamt

European
Patent Office

Office européen
des brevets

# EUROPEAN SEARCH REPORT

**Application Number**

EP 25 20 8223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/283003 A1 (JANG SEOKHOON [KR] ET AL) 22 August 2024 (2024-08-22) * paragraphs [0073] - [0075]; claims 1,11,14; figures 1,4 * | 1-15 | INV. H01M10/04 H01M10/052 |
| X | US 2017/346130 A1 (MAEDA KOUICHIROU [JP] ET AL) 30 November 2017 (2017-11-30) * claims 1,4,9; examples * | 1-15 | |
| X | US 2008/274394 A1 (SCHORMANN ANDREAS [DE] ET AL) 6 November 2008 (2008-11-06) * claims 1,8,22; examples 2,3 * | 1-15 | |
| A | US 2023/395868 A1 (OH SE YOUNG [KR] ET AL) 7 December 2023 (2023-12-07) * claim 1 * | 1-15 | |

**TECHNICAL FIELDS SEARCHED (IPC)**

H01M

The present search report has been drawn up for all claims

| Place of search | Date of completion of the search | Examiner |
|---|---|---|
| Munich | 17 February 2026 | Duval, Monica |

EPO FORM 1503 03.82 (P04C01)

## ANNEX TO THE EUROPEAN SEARCH REPORT
## ON EUROPEAN PATENT APPLICATION NO.

EP 25 20 8223

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2026

| Patent document cited in search report | Publication date | Patent family member(s) | | Publication date |
|---|---|---|---|---|
| US 2024283003 A1 | 22-08-2024 | EP | 4300647 A1 | 03-01-2024 |
| | | JP | 7686918 B2 | 03-06-2025 |
| | | JP | 2024509202 A | 29-02-2024 |
| | | US | 2024283003 A1 | 22-08-2024 |
| | | WO | 2023058955 A1 | 13-04-2023 |
| US 2017346130 A1 | 30-11-2017 | CN | 106797055 A | 31-05-2017 |
| | | EP | 3223356 A1 | 27-09-2017 |
| | | HU | E050728 T2 | 28-01-2021 |
| | | JP | 6635043 B2 | 22-01-2020 |
| | | JP | WO2016080143 A1 | 24-08-2017 |
| | | KR | 20170085053 A | 21-07-2017 |
| | | PL | 3223356 T3 | 30-11-2020 |
| | | US | 2017346130 A1 | 30-11-2017 |
| | | WO | 2016080143 A1 | 26-05-2016 |
| US 2008274394 A1 | 06-11-2008 | CN | 1929182 A | 14-03-2007 |
| | | DE | 102005042916 A1 | 22-03-2007 |
| | | EP | 1922780 A1 | 21-05-2008 |
| | | JP | 5483877 B2 | 07-05-2014 |
| | | JP | 2009508298 A | 26-02-2009 |
| | | KR | 20080043331 A | 16-05-2008 |
| | | TW | 200742151 A | 01-11-2007 |
| | | US | 2008274394 A1 | 06-11-2008 |
| | | WO | 2007028790 A1 | 15-03-2007 |
| US 2023395868 A1 | 07-12-2023 | CN | 116349044 A | 27-06-2023 |
| | | EP | 4203121 A1 | 28-06-2023 |
| | | ES | 3045711 T3 | 28-11-2025 |
| | | HU | E073346 T2 | 28-01-2026 |
| | | KR | 20220051565 A | 26-04-2022 |
| | | US | 2023395868 A1 | 07-12-2023 |
| | | WO | 2022086096 A1 | 28-04-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 1020240139713